# EUROPEAN PATENT SPECIFICATION

(11) **EP 1 012 489 B1**
(45) Date of publication and mention of the grant of the patent: **06.05.2004**
(21) Application number: 98944415.3
(22) Date of filing: 18.09.1998
(51) Int. Cl.: F16F 1/46, F16G 11/12

(54) **SPRING ELEMENT**
FEDERELEMENT
ELEMENT DE RESSORT

(30) Priority: 19.09.1997 SE 9703387
(43) Date of publication of application: 28.06.2000
(73) Proprietor: ARONOWITSCH & LYTH AB, S-114 41 Stockholm (SE)
(72) Inventor: HOLMSTEN, Ronny, S-429 32 Kullavik (SE)
(74) Representative: Hammar, Ernst
(86) International application number: PCT/SE1998/001676
(87) International publication number: WO 1999/015806

(56) References cited:
- EP-A2- 0 255 281
- US-A- 2 878 013
- US-A- 3 817 507
- US-A- 3 869 114

## Description

The present invention relates to a spring element arranged to be provided at a rope to generate an additional stretch to the stretch of the rope against a spring force when a pulling force is applied in the rope.

Spring elements of essentially the same kind are known in the art and are used, among other things, for mooring ropes for boats, for providing a damping additional stretch when a pulling force is applied in a rope holding the spring element.

Prior art document US-A-3 869 114 shows the features of the preamble of claim 1.

The prior art is, however, associated with significant disadvantages. In some cases the spring element has to be thread onto the rope, which takes time and is difficult, since the rope, which is usually very rigid, has to be bent in bends having small bending radii and since holes for pulling the rope through, having almost the same diameter as the rope must be used to lock the element and the rope to each other, enabling the pulling force on the element. This also implies that the element must be carefully adapted to the dimension of the rope and that a number of different fastening elements are required to cover a particular interval of rope dimensions.

The present invention, among other things, solves the problems stated above, in that it does not have to be thread onto the rope but can be arranged in the desired position along the rope, and in that a particular element can be used for a wide interval of rope dimensions.

Below the invention will be described in more detail in connection with embodiments and the appended drawings, in which:
Figure 1 illustrates a first embodiment of a spring element according to the invention seen from the side and arranged near a schematically shown pull element,
Figure 2 illustrates a second embodiment of a spring element according to the invention seen as in Figure 1,
Figure 3 shows the spring element shown in Figure 1 laid out substantially in one plane, the frame element of the spring element being seen from below relative to Figure 1,
Figure 4 shows the spring element according to Figure 3 seen from the opposite side compared to Figure 3,
Figure 5 is a sectional view I according to Figure 4,
Figure 6 is a sectional view 2 according to Figure 4,
Figure 7 shows the spring element according to Figure 1 seen from the right in Figure 1.

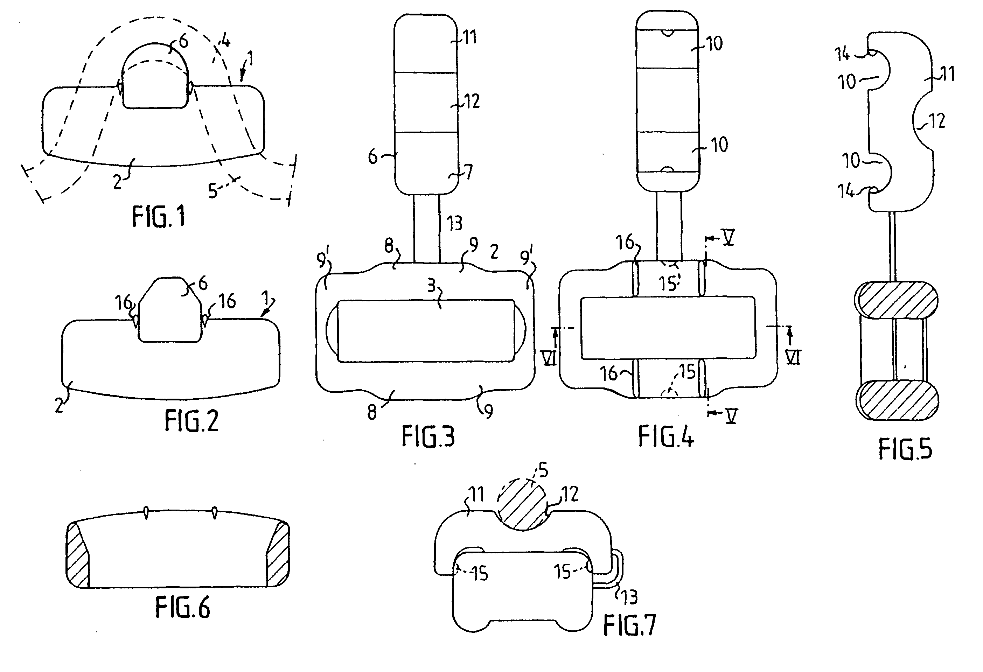

In Figure 1 the reference number 1 denotes a spring element according to the invention, comprising a frame element 2 arranged to form an elongated recess 3, Figure 2, into which a portion 4, substantially bent to form a U shape, a loop portion, of a pull element 5, is intended to be introduced as shown schematically in Figure 1. The reference number 6 denotes a crossbar, arranged to be removably provided near the frame element and extend across the recess and to rest against the frame element, which is also shown schematically in Figure 1. The pull element in the loop portion is intended to extend across the crossbar, whereby the spring element is removably arranged at the pull element.

At least the frame element is made from a resilient material, preferably a material which, after deformation caused by a load resumes its original shape. According to preferred embodiments the crossbar is at one end 7 pivotably attached to the frame element and arranged to be pivoted towards and away from the frame element.

According to the shown embodiment the frame element has a substantially rectangular configuration and forms a substantially rectangular recess. The long sides of the recess preferably somewhat exceed twice the diameter of the thickest pull element with which the spring element is intended to be used.

Likewise preferred is an embodiment in which the frame element has a greater material thickness at least at the part 8 of its long sides 9 at which the crossbar is intended to rest, than at its short sides 9.

An embodiment is shown in which the crossbar comprises two grooves 10, one for each long side 9 of the frame element, in which a part 8 of a long side of the frame element is intended to be introduced, thus supporting the crossbar. It is also preferred that the crossbar at its portion 11 facing away from the frame element when in its attached position, comprises a rounded recess 12 against which the pull element is intended to rest.

Also according to the shown embodiment the crossbar is connected to the frame element through a pliant, relatively thin portion 13 of material, whereby the frame element and the crossbar are connected to a unit and preferably intended to be manufactured in one piece, preferably laid out substantially in one common plane.

The function of the spring element according to the invention should have been made clear in the above. For arranging the spring element in the desired position along a pull element such as a mooring rope or a tow-line, the crossbar is made to take its position pivoted away from the frame element. The pull element is bent to a U-shaped configuration, a loop portion is introduced in the recess corresponding to from below in Figure 1. The crossbar is introduced in the loop portion and arranged at the frame element. When applying a pulling force in the pull element the pull element extends from the frame element in different directions at the side of the frame element facing away from the crossbar and extends across the crossbar, whereby a pulling force is applied. For example the spring element may be pulled and stretched towards a spring force and in such a way that an additional damping stretch to that of the pull element is provided by the spring element, for example if the pull element is pulled abruptly.

As should also have been made clear in the above the spring element according to the invention solves the problems with which prior art solutions are associated.

Above, the invention has been described in connection with embodiments. Of course other embodiments as well as small modifications and amendments are perceivable without leaving the underlying inventive idea.

Thus, the crossbar and the frame element may comprise means for fixing the crossbar at the frame element, and extruding portions 14 of the crossbar, for example in said grooves, and corresponding recesses 15 in the frame element, or vice versa, whereby the crossbar can be snapped onto the frame element. According to preferred embodiments the parts 8 comprise two pairs of opposite elevations 16, arranged to prevent the crossbar 6 from being displaced perpendicular to its longitudinal direction when arranged in its position resting against the portions 8, that is, in the longitudinal direction of said portions 8.

The invention should therefore not be considered as limited to the embodiments stated above, but may be modified within the scope of the claims.

## Claims

1. A spring element suitable for being provided near a rope or a corresponding elongated and pliant pull element for generating an additional stretch against a spring force, in addition to the stretch of the rope when applying a pulling force in the pull element,
comprising a frame element (2) forming a preferably elongated recess (3) in which a loop portion (4) of the pull element (5) is intended to be introduced, **characterized by** a crossbar (6), arranged to be removably positioned near the frame element (2) extending across the recess and resting against the frame element, said pull element in the loop portion being intended to extend across said crossbar, wherein at least the frame element is made from a resilient material.

2. A spring element according to claim 1, **characterized in that** the crossbar, at one end (7) is pivotably attached to the frame element and arranged to be pivoted towards and away from the frame element.

3. A spring element according to claim 1 or 2, **characterized in that** the frame element has a substantially rectangular configuration, thereby forming a substantially rectangular recess.

4. A spring element according to claim 1, 2 or 3, **characterized in that** the frame element has a greater material thickness at at least the portion (8) of its longitudinal sides (9) to which the crossbar is intended to rest, than at its short sides (9').

5. A spring element according to claim 1, 2, 3 or 4, **characterized in that** the crossbar comprises two grooves (12), one for each long side of the frame element in which it is intended to be introduced at a long side of the frame portion, thus carrying the crossbar.

6. A spring element according to claim 1, 2, 3, 4 or 5, **characterized in that** the crossbar at its portion (11) facing away from the frame element when in the attached position, comprises a rounded recess (12) against which the pull element is intended to rest.

7. A spring element according to any one of the preceding claims, **characterized in that** the crossbar is attached to the frame element through a pliant portion (13), whereby the frame element and the crossbar are connected to form one unit and preferably intended to be manufactured in one piece and in one material, preferably laid out in substantially one common plane.

## Patentansprüche

1. Federelement, geeignet zur Anordnung an einem Seil oder einem entsprechenden langgestreckten und biegsamen Zugelement zur Erzeugung einer zur Dehnung des Seils zusätzlichen Dehnung gegen eine Federkraft, wenn eine Zugkraft auf das Zugelement ausgeübt wird, mit einem Rahmenelement (2), das eine vorzugsweise langgestreckte Ausnehmung (3) bildet, in der ein Schleifenabschnitt (4) des Zugelementes (5) eingeführt wird,
**dadurch gekennzeichnet, dass** ein Joch (6) abnehmbar in der Nähe des Rahmenelementes (2) angeordnet ist, das sich über die Ausnehmung erstreckt und gegen das Rahmenelement abgestützt ist und dass das Zugelement sich in seinem Schleifenabschnitt um das Joch herum erstreckt, wobei wenigstens das Rahmenelement aus einem elastischen Material besteht.

2. Federelement nach Anspruch 1,
**dadurch gekennzeichnet, dass** das Joch an einem Ende (7) schwenkbar mit dem Rahmenelement verbunden und so angeordnet ist, dass es auf das Rahmenelement hin und von diesem weg verschwenkt werden kann.

3. Federelement nach den Ansprüchen 1 oder 2,
**dadurch gekennzeichnet, dass** das Rahmenelement eine im Wesentlichen rechteckige Gestalt besitzt und dadurch eine im Wesentlichen rechteckige Ausnehmung bildet.

4. Federelement nach den Ansprüchen 1, 2 oder 3,
**dadurch gekennzeichnet, dass** das Rahmenelement wenigstens an dem Teil (8) seiner Längsseiten (9), wo das Joch aufliegen soll, eine größere Materialdicke besitzt als an den kurzen Seiten (9').

5. Federelement nach den Ansprüchen 1, 2, 3 oder 4,
**dadurch gekennzeichnet, dass** das Joch zwei Nuten (12) aufweist, und zwar jeweils eine für jede Längsseite des Rahmenelementes, in die eine Längsseite des Rahmenteiles eingeführt werden soll, um so das Joch zu tragen.

6. Federelement nach den Ansprüchen 1, 2, 3, 4 oder 5,
**dadurch gekennzeichnet, dass** das Joch an dem in Aufsatzstellung vom Rahmenelement weg weisenden Abschnitt (11) eine abgerundete Ausnehmung (12) aufweist, gegen die das Zugelement zu liegen kommen soll.

7. Federelement nach einem der vorhergehenden Ansprüche,
**dadurch gekennzeichnet, dass** das Joch am Rahmenelement über einen biegsamen Abschnitt (13) angeordnet ist, wodurch das Rahmenelement und das Joch eine Einheit bilden und vorzugsweise einstückig aus einem Material herstellbar sind, wobei die Teile vorzugsweise in einer gemeinsamen Ebene liegen.

## Revendications

1. Elément de ressort, convenant pour être prévu à proximité d'un câble ou d'un élément de traction allongé et pliable correspondant, afin de générer un étirement additionnel à l'encontre d'une force élastique, en plus de l'étirement du câble, lorsqu'on applique une force de traction dans l'élément de traction,
comprenant un élément formant cadre (2), formant une cavité (3) de préférence allongée dans laquelle une partie de boucle (4) de l'élément de traction (5) doit être introduite, une barre transversale (6), agencée pour être positionnée de façon amovible à proximité du cadre **caractérisé par** l'élément (2), s'étendant dans la cavité et reposant contre l'élément formant cadre, ledit élément de traction placé dans la partie de boucle étant prévu pour s'étendre le long de ladite barre transversale, dans lequel au moins l'élément formant cadre est formé d'un matériau élastique.

2. Elément de ressort selon la revendication 1, **caractérisé en ce que** la barre transversale, à une extrémité (7), est fixée de façon pivotante à l'élément formant cadre et agencée pour être pivotée en rapprochement et en écartement de l'élément formant cadre.

3. Elément de ressort selon la revendication 1 ou 2, **caractérisé en ce que** l'élément formant cadre est de configuration sensiblement rectangulaire, formant de cette manière une cavité sensiblement rectangulaire.

4. Elément de ressort selon la revendication 1, 2 ou 3, **caractérisé en ce que** l'élément formant cadre présente une épaisseur de matériau supérieure en au moins la partie (8) de ses côtés longitudinaux (9) auxquels la barre transversale est prévue pour reposer, que ce qu'elle est à ses côtés courts (9').

5. Elément de ressort selon la revendication 1, 2, 3 ou 4, **caractérisé en ce que** la barre transversale comprend deux gorges (12), une pour chaque côté long de l'élément formant cadre, dans lequel il est prévu qu'il soit introduit sur un côté long de la partie de cadre, portant ainsi la barre transversale.

6. Elément de ressort selon la revendication 1, 2, 3, 4 ou 5, **caractérisé en ce que** la barre transversale, à sa partie (11) opposée à l'élément formant cadre, lorsqu'on est à la position attachée, comprend une cavité (16) arrondie contre laquelle l'élément de traction doit reposer.

7. Elément de ressort selon l'une quelconque des revendications précédentes, **caractérisé en ce que** la barre transversale est fixée à l'élément formant cadre par une partie pliante (13), de manière que l'élément formant cadre et la barre transversale soient reliés pour former une unité et de préférence prévus pour être fabriqués d'une seule pièce et en un seul matériau, de préférence posés dans un plan pratiquement commun.
